# EUROPEAN PATENT SPECIFICATION

(11) **EP 3 117 529 B1**
(45) Date of publication and mention of the grant of the patent: **13.05.2020**
(21) Application number: 15709670.2
(22) Date of filing: 11.03.2015
(51) Int. Cl.: H04B 3/46, H04B 3/487

(54) **COMMUNICATION DEVICES, SYSTEMS AND METHODS**
KOMMUNIKATIONSGERÄTE , SYSTEME UND VERFAHREN
DISPOSITIFS DE COMMUNICATION, SYSTÈMES ET PROCÉDÉS

(30) Priority: 11.03.2014 US 201461950981 P
(43) Date of publication of application: 18.01.2017
(60) Divisional application: 20167656.6
(73) Proprietor: Lantiq Beteiligungs-GmbH & Co. KG, 85579 Neubiberg (DE)
(72) Inventor: OKSMAN, Vladimir, Morganville, NJ 07751 (US)
(74) Representative: Sticht, Andreas
(86) International application number: PCT/EP2015/055083
(87) International publication number: WO 2015/135993

(56) References cited:
- EP-A1- 2 120 348
- US-A1- 2008 031 313
- RAVI MANTRI METANOIA TECHNOLOGIES INC: "G.hn, G.vdsl, G.fast : Powerline Interference Indication and Mitigation for DSL transceivers;C 0175", ITU-T DRAFT ; STUDY PERIOD 2013-2016, INTERNATIONAL TELECOMMUNICATION UNION, GENEVA ; CH, vol. 18/15,4/15, 29 October 2013 (2013-10-29), pages 1-16, XP044115212, [retrieved on 2013-10-29]

## Description

### TECHNICAL FIELD

The present application relates to communication devices, systems and methods.

### BACKGROUND

Digital Subscriber Line (DSL) communication techniques are often used to provide data services, for example an Inter-net connection, to customers. The term DSL as used herein is to cover any of a plurality of so-called DSL flavors, like ADSL, ADSL2, VDSL, VDSL2 or also the upcoming G.fast.

Digital Subscriber Line technology, during all its history, attempted to increase the bit rate in the aim to deliver more broadband services to the customer. Copper loops deployed from an actual Central Office (CO) to customer premises (CPE) are rather long and typically do not allow transmission of data with bit rates of more than a few Mb/s. Therefore, to increase the customer available bit rates, modern access networks use street cabinets, MDU (mains distribution unit) cabinets, and similar arrangements: the cabinet is connected to the Central Office by a high-speed fiber communication line, e.g., gigabit passive optical network (GPON) and installed close to the customer premises. From these cabinets, high-speed DSL systems, such as Very-High-Bit-Rate DSL (VDSL2), provide connection to the CPE.

For simplicity's sake, the term "Central Office" or "Central Office Equipment" in the following will be used to not only refer to the actual Central Office, i.e. a central location of a provider, but also to all other equipment on a provider side, for example the above-mentioned street cabinets or MDU cabinets as well as other equipment like digital subscriber line access multiplexers (DSLAMS).

Power consumption is one of the key issues for cabinet deployments. Since most of DSL lines are always on, they consume power all the time, regardless of whether the customer is using the service or not. In the aim to reduce power consumption, techniques of power reduction are needed to reduce transmit power in particular during the time when the line is not used actively used or used with reduced bit rate.

One obvious way to reduce power is to switch a DSL modem used off, and customers (on CPE side) are welcome to do that. However, most customers do not switch off their DSL, keeping the line on even at night time to avoid long waiting time for DSL startup (especially for vectored VDSL2 startup may last up to 60-90 seconds). By the same reason it is not possible to save power this way by shorter breaks (switch-off periods) during the day.

A so called "low power mode" currently used in ADSL2 as defined in ITU-T Recommendation G.922.3 was also proposed for VDSL2 at some point. With this ADSL low power mode, a modem monitors the incoming data traffic and turns into low transmit power and low bit loading when the required bit rate drops substantially. When the service bit rate is back at high values, the modem exits low power mode and returns to normal operation. This method is rather efficient, because the power consumption of the modem significantly depends on the value of the transmit power.

To avoid loss of data (keep the process seamless), the exit from low power mode in ADSL2 should be very fast; otherwise incoming data may overflow a buffer of the modem and get lost. This is not necessarily the case in VDSL2, which provides a very high bit rate, accommodating multiple services. When a VDSL2 line (e.g. modems coupled to the line) transitions from low power mode, e.g. due to start of a particular service, only a part of the provided capacity is required. Therefore, transition from low power mode (called L2 state) to normal operation (called L0 state) can be done by several steps (multi-step exit), as proposed for additions to the VDSL2 standard.

A disadvantage of the low power (L2) mode used in ADSL as mentioned above is that problems may arise due to non-stationary behavior of a communication used. When a line going to L2, the crosstalk this line generates into other lines decreases and other lines takes an advantage of this crosstalk reduction to increase their bit rates. When the line is quickly turning back into normal operation, the crosstalk generated by this line suddenly increase, which can significantly reduce performance of other lines and even kick them out of synchronization. Thus, low power mode may cause an unstable connection.

The multi-step exit proposed in the VDSL2 low power mode mentioned above partially resolves this issue, because the line returning from L2 into L0 does it by multiple steps, each time by a small increase of power spectral density (PSD) (3-5 dB), while time periods between steps are set to allow other systems to perform on-line reconfiguration (OLR) and thus to accommodate their bit loading to the PSD increase step. The problem is that with the currently defined OLR procedures, the time between steps is rather long (about 30-40 seconds) which may be inconvenient in some cases where a faster transition to normal operation (L0) is required.

Another problem caused by non-stationary noise is that when different lines in a cable binder transition from L2 to L0 and L0 to L2, the overall crosstalk generated into each line changes, as lines in a same cable binder are likely to influence each other via crosstalk. Thus, for example, when one line transitions from L2 to L0 while all other lines are in L2 mode, this line may assign a very high bit loading, based on low SNR. Further, when one or more lines decide to transition from L2 to L0, it will result in high crosstalk generated into the first line, which may cause a failure of the first line, as the initially selected bit loading cannot be supported any longer due to this crosstalk. It was pointed out that another source of excessive crosstalk may be tones that are set inactive during L2 - when these tones are reinstated (e.g., at a first step of an exit procedure), they may severely disturb L0 lines, i.e. other lines being in normal operation.

To overcome the non-stationary noise two techniques were suggested:
1. Use of so-called COMB signal. By this method, there is a pre-determined set of tones that are transmitted with no change in power both in low power mode (e.g. L2) and in full power mode (e.g. L0), while all other tones are transmitted in low power mode with significantly reduced power. Such designated "always on" tones are transmitted at full power irrespective of the actual power management state of the modem. With this approach, the neighboring lines may evaluate the crosstalk from the line in low power mode generated by "always on" tones based on SNR (signal-to-noise ratio) measurement on these tones and estimate (by interpolation or extrapolation) the SNR on other tones, which are currently transmitted with reduced power. Specifically, it has been proposed to use every 10-th tone as a monitoring tone). Use of COMB signal allows mitigation of the impact of non-stationary crosstalk because SNR on monitoring toned doesn't depend whether lines are in L0 or L2 state.
   The disadvantage of COMB system is that it requires either to apply the same standard monitoring tones on all lines (which not work because some tones may not be available in some lines due to RFI or bridged taps) or to coordinate between all VDSL2 lines in the binder on what monitoring tones to be used (which is not possible in unbundled environment). Besides:
   - estimation of the SNR using interpolation is inaccurate in case of narrow-band noise or notches in the loop transfer function due to bridge taps;
   - the achievable power savings are limited because too many tones have to stay active for sufficiently accurate SNR estimation between the monitoring tones.

   To improve COMB operation, another proposal was to rotate the selected tones from one symbol to other, so that the average SNR measured in all symbols will be for all tones. However, this method requires very long averaging time and doesn't work well if only few systems are participating (because superframes are not synchronized and too long time required for estimation of the SNR).
2. Use of Virtual Noise (VN), which requires the receiver to apply some noise offset value defined by a user when bit loading is set. ITU-T Recommendation G.993.2 defined Transmitter-referred and Receiver-referred VN to be applied during initialization. Use of VN reduces the impact of a non-stationary component of the noise by bringing a constant stationary noise component in bit loading computation.
   The disadvantage of VN, as shows long practical experience, is that its setting is problematic for the user (the user has to select some suitable value of VN) and VN does not address the actual real condition of the particular line. Thus, VN often cause unjustified performance loss and may require more transmit power.
   Ravi Mantri Metanoia Technologies Inc. : "G.hn, G.vdsl, G.fast: Powerline Interference Indication and Mitigation for DSL transceivers; C 0175", ITU-T Draft; Study Period 2013-2016, International Telecommunication Union, Geneva; CH, vol. 18/15, 4/15, 29 October 2013 (2013-10-29), pages 1-16 discloses a device to mitigate crosstalk noise on a signal, where a transceiver determines a virtual noise and then determines a bit-loading value based on this virtual noise determined by the receiver. At showtime, the transceiver may update the virtual noise.
   EP 2 120 348 A1 also uses virtual noise, but does not disclose updating virtual noise in showtime.
   Another document which uses virtual noise is
   US 2008/031313 A1.

### SUMMARY

A device as defined in claims 1 is provided. The dependent claims define further embodiments.

### * BRIEF DESCRIPTION OF THE DRAWINGS

Fig. 1 illustrates a communication system according to an embodiment.
Fig. 2 illustrates a transceiver according to an embodiment.
Fig. 3 illustrates a multi-step transition between normal operation and low power mode as used in existing standards.
Fig. 4 illustrates the use of low power modes as used in existing standards.
Figs. 5 to 7 illustrate flowcharts of methods according to embodiments.

### DETAILED DESCRIPTION

In the following, various embodiments will be described in detail referring to the attached drawings. These embodiments serve illustrative purposes only and are not to be construed as limiting. While for example some embodiments may be described as comprising a plurality of features or elements, in other embodiments some of these features or elements may be omitted and/or may be replaced by alternative features or elements. Furthermore, in some embodiments additional features or elements in addition to those explicitly shown in the drawings or described herein may be provided.

Features or elements of different embodiments may be combined with each other to form further embodiments unless noted otherwise. Modifications and variations described for one of the embodiments may also be applicable to other embodiments.

Any connections or couplings between blocks, elements, devices and the like may be direct connections or couplings, i.e. connections without additional intervening elements, or indirect connections or couplings, i.e. connections or couplings with one or more additional intervening elements, as long as the general purpose of the connection or coupling, for example to transmit a certain kind of information or to transmit a certain kind of signal, is essentially maintained.

In some embodiments, methods and corresponding devices are provided that can mitigate non-stationary noise and thus provide flexible transition in and out of L2 mode without significant disturbance between lines (both L2 lines and L0 lines). In some embodiments, so-called Reference Virtual Noise (RVN) may be used, which may be generated by a receiver (e.g. CPE receiver) (possibly with the assistance of a transmitter, e.g. CO side transmitter) and which may reflect an actual level of noise in a line e.g. during showtime. The value of RVN may be updated during system operation, upon new lines are entering the binder and/or lines drop off. By applying RVN when determine the bit loading, both during L2 mode and L0 mode, the receiver substantially may mitigate non-stationary noise in some embodiments. A level of RVN may meet the particular conditions in a cable binder, thus minimum performance loss may be guaranteed in some embodiments.

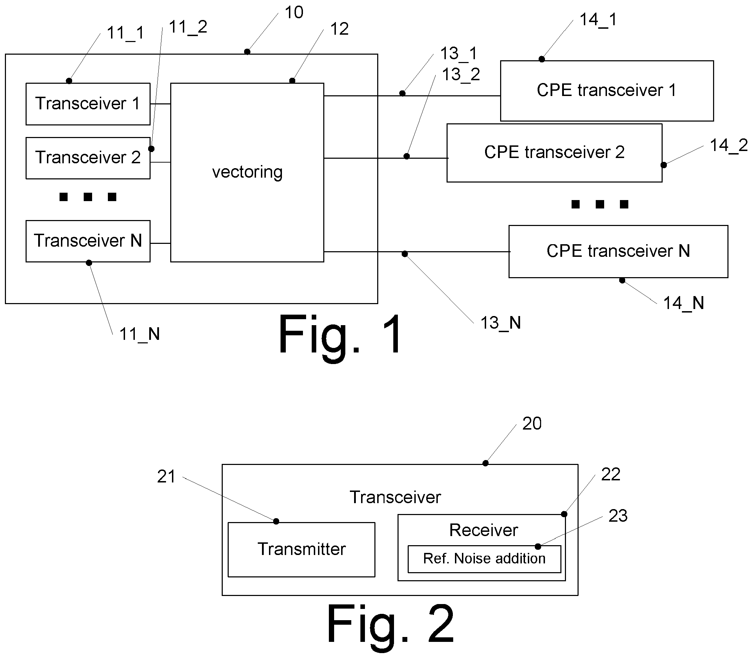

Fig. 1 illustrates a communication system according to an embodiment. The embodiment of Fig. 1 comprises a Central Office side communication device 10, which may for example be located in a Central Office, a street cabinet, a DSLAM, an MDU cabinet etc. The communication device comprises a plurality of transceivers 11_1 to 11_N, collectively referred to as transceivers 11. The number of transceivers 11 is not particularly limited and may depend on a particular application. Transceivers 11 are coupled via a respective plurality of communication lines 13_1 to 13_N, collectively referred to as communication lines 13, with a respective plurality of customer premises equipment (CPE) transceivers 14_1 to 14_N, collectively referred to as CPE transceivers 14.

Communication lines 13 may for example be copper lines, for example twisted pair lines. Transceivers 11 may communicate with transceivers 14 for example using a DSL communication technique like VDSL2 or G.fast.

Transceivers 11, 14 may be adapted to enter a low power mode when little or no data is to be transmitted. Examples for low power mode entering and leaving will be explained later. Moreover, communication lines 13 may be close to each other, for example run at least partially in a common cable binder. This makes them prone to crosstalk, i.e. signals transmitted in one of the communication lines 13 may influence (alter) signals transmitted in one or more other ones of communication lines 13. To mitigate the effects of such crosstalk, communication device 10 may comprise a vectoring device 12 which reduces the crosstalk by joint processing of signals transmitted by transceivers 11 or joint processing of signals received at device 10 from transceivers 14. Vectoring is a technique which for example for VDSL2 is standardized by ITU-T Recommendation G.993.5 and will therefore not be described in detail. In other embodiments, vectoring device 12 may be omitted. In other words, techniques using reference virtual noise as discussed herein may be used with or without vectoring.

In embodiments, transceivers 11 and/or transceivers 14 may use a discrete multitone modulation technique, where data is modulated onto a plurality of carriers, also referred to as tones. Such DMT modulation techniques are used in many DSL systems. On each tone, one or more bits may be "loaded". The number of bits loaded on each tone may for example be provided in a so-called bit loading table. Generally, bit loading may refer to a process determining a number of bits to be loaded onto each tone, while the number of bits or a possible maximum thereof may, for example, depend on crosstalk or other noise types. Bit loading may also depend on a mode of operation, e.g. normal mode or low power mode.

In embodiments, on a receiver side of lines 13 (for example in CPE transceivers 14 for the downstream direction, i.e. a direction from device 10 to transceivers 14, or in transceivers 11 for the upstream direction, i.e. a communication direction from transceivers 14 to device 10) a reference virtual noise (RVN) may be determined e.g. based on actual measurements, as will be explained below in more detail. This reference virtual noise will be taken into account when determining the bit loading. This may mitigate negative effects caused by non-stationary noise, which otherwise may occur when one of the communication lines 13 transitions from a power saving state (for example L2 state) to normal operation. RVN can also address other cases of non-stationary noise.

Fig. 2 illustrates a transceiver 20 according to an embodiment. Transceiver 20 may for example be used to implement any one of transceivers 11 or transceivers 14 of Fig. 1. Transceiver 20 comprises a transmitter 21 and a receiver 23. Transmitter 21 and receiver 22, apart from a reference noise addition circuit 23 explained below, may be implemented as any conventional transmitter or receiver and may for example comprise filters, modulators, demodulators, amplifiers, devices for Fourier transformation or inverse Fourier transformation or any other conventional components for transmitters or receivers.

Reference noise addition circuit 23 serves to facilitate use of reference virtual noise, as will be explained below in more detail, and/or may add or otherwise take into account the reference virtual noise when determining a bit loading. In this way, effects of line transitioning from a low power mode to a normal mode of operation may be mitigated in some embodiments. Similarly, use of RVN may mitigate effects of other types of non-stationary noise.

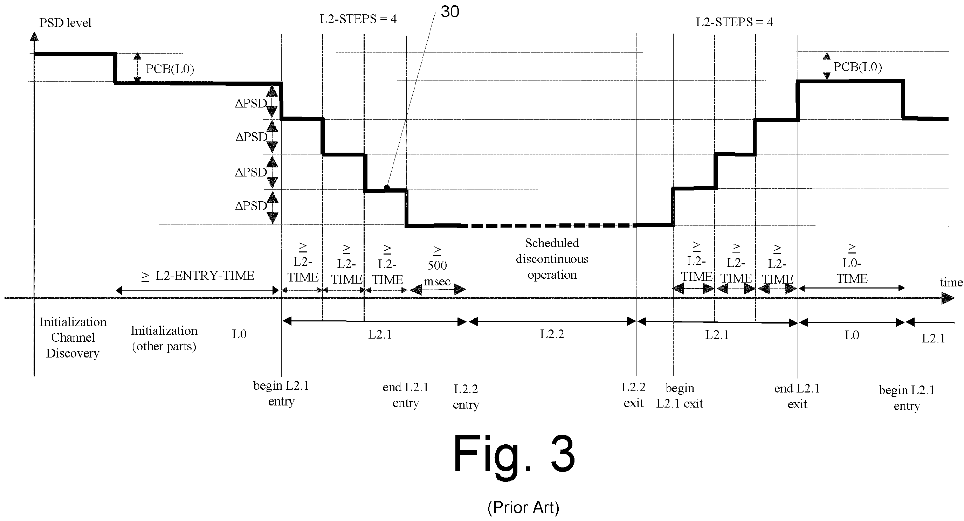

As a basis for some embodiments, a low power mode (L2) as mentioned in the background section and which is achieved by reducing the signal transmit power when no high-volume traffic is present may be used. The reduction of transmit power when transitioning to low power mode may be performed in one or more steps: at each step transmit power is reduced and bit rate (bit loading) is reduced accordingly. An example of complete transition from normal operation state L0 (high power) to low power state L2 is presented in Fig. 3.

When high traffic occurs, the system may transition from L2 back to L0 using again multiple steps. The number of steps to enter L2 and exit from L2 is usually the same, although this not necessarily needs to be the case. The system may exit back to L0 during its transition into L2 if traffic changes accordingly.

Fig. 3 illustrates an example for such a transitioning from a normal mode (L0) to a low power mode (L2.2) via one or more intermediate low power modes (L2.1) and back. Low power modes as discussed with reference to Fig. 3 and as applicable to embodiments may correspond to low power modes as defined in applicable DSL standards, e.g. ITU-T G.993.2, and will therefore not be discussed in detail. In particular, a curve 30 in Fig. 3 illustrates a power spectral density (PSD) level for a communication line over the time. The PSD first falls from a level used in channel discovery to a level used in normal operation L0. When a transition to a low power mode is made, in the example of Fig. 3 the power spectral density falls in four steps, each step size in the example of Fig. 3 being the same ΔPSD. The transition back to L0 occurs in a similar manner. It should be noted that the number of four steps serves only as an illustrative example, and any number of steps may be used. Moreover, the step sizes for each of the steps need not be the same.

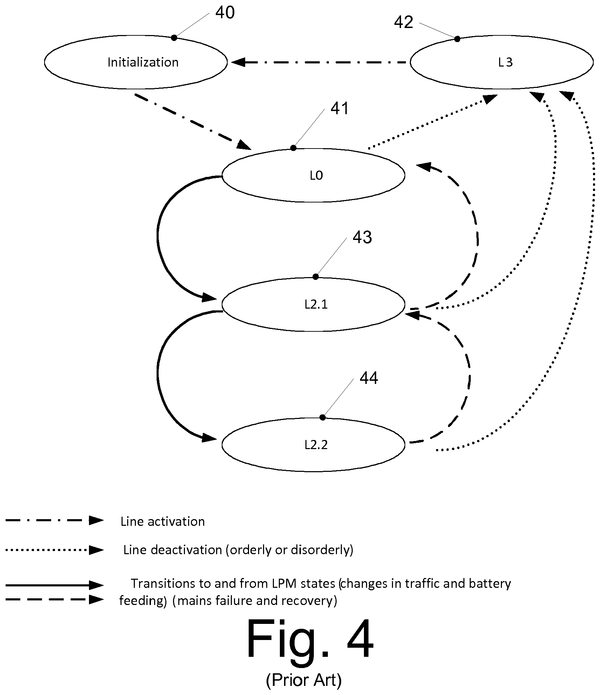

When a line transitions from low power mode (for example L2.2 in Fig. 3) to regular mode (for example L0 in Fig. 3), then the transmit power of the line increases (stepwise as in Fig. 3 or as in any other manner). This means that crosstalk from the transitioning line to other lines also increases, which may impact performance of other lines (both lines in regular mode and lines in low power mode). The use of a reference virtual noise as mentioned above with reference to Figs. 1 and 2 and as will be explained below in more detail may help to mitigate such adverse effects in some embodiments. Before explaining the concept of reference virtual noise in more detail, for further illustration purposes Fig. 4 illustrates a state diagram showing transitions between a normal mode L0, low power modes L2.1 and L2.2, and a power down mode L3 (line inactive). Such transitions are for example defined in the above-mentioned ITU-T Recommendation G.993.2.

State 40 illustrates an initialization state. After initialization, a line enters a state 41 associated with a regular mode, for example L0. Based e.g. on changes of traffic, the line may change between state 41 and low power modes 43, 44, for example associated with L2.1 and L2.2, respectively. In states 43 and 44, still data may be transmitted, but generally less data than in state 41. The transitions between states 41, 43 and 44 therefore are transitions to and from low power mode states, for example due to traffic and/or due to changes in an available supply voltage.

When a line is deactivated, the line may transition to state 42, which may be associated with a so-called L3 mode (power down), in which no data is transmitted and a corresponding receiver, transmitter, or transceiver may be turned off. When the line is to be activated again, the line transitions from state 42 to the already mentioned initialization state 40.

Next, addition of reference virtual noise according to some embodiments will be discussed in more detail. Some of the embodiments may be implemented in systems and devices using low power modes or vectoring as discussed with reference to Figs. 1 to 4 for example by adding reference virtual noise as already indicated with respect to Figs. 1 and 2, but are not limited to such systems.

For explanatory purposes, it is assumed that two transceivers, one at a Central Office (CO), at a cabinet, or the like, and one at customer's premises (CPE), are connected by a pair (e.g. twisted pair) of a multi-pair cable and started data transmission (are in showtime). Examples for such transceivers are one of transceivers 11 of Fig. 1 together with the associated one of transceivers 14 of Fig. 1. For simplicity's sake, for the explanation which follows at first only a downstream direction (from Central Office side to CPE side) is considered, which in many applications is more important from a power saving perspective. However, techniques discussed herein may also be applied to the upstream direction in a very similar manner, and differences between upstream and downstream in some embodiments will be explained further below.

During showtime, in an embodiment the receiver at the CPE measures the actual total noise caused by crosstalk from adjacent cable pairs, background noise of the line, and its own noise floor. From this measurement, using some predefined rules, examples of which will be given later, the receiver generates a "reference noise pattern" which reflects the actual total noise at the receiver and in embodiments may be used to compute the bit loading and SNR margin actually used by the receiver at the time of the measurement. From the measured noise values of this reference noise pattern (in dBm/Hz), in some embodiments the receiver at the CPE generates a noise figure further called "Reference Virtual Noise" (RVN), which is a function of frequency. In this case, the rules of generating the RVN should be provided to the CPE (defined in the standard or determined by the system management at the CO.

In another embodiment, the RVN is determined by the a management system at the CO based on the actual noise measurements performed at the CPE for this purpose, the CPE shall send to the CO the measured actual noise.

The value of RVN is further used by the receiver to compute the bit loading, to some extent similarly as with the currently defined in VDSL2 Receiver-Referred Virtual Noise (see ITU-T Recommendation G.993.2). The difference to the conventional approach is, however, that the Virtual Noise currently defined in G.993.2 is a MIB parameter set by the user and applied at initialization, while RVN is generated in showtime based on actual measurement and defined rules, as explained above.

The way RVN in embodiments is generated for each CPE independently during showtime and applied to set up the bit loading and other relevant transmission parameters of this line during L0, L2, and intermediate states (during transition from L0 to L2 and back, from L2 to L0) may be the following:
- if the actual noise is less than RVN, the RVN is applied to define the bit loading;
- if actual noise is same or higher than RVN, the RVN is ignored (and bit loading is set based on actual noise).

Thus, all the bit loading settings in all states are performed using the same reference noise level. If RVN is selected properly, regardless in which state to which state the line transitions and in which state are currently other lines of the binder, the bit loading may be set so that it always corresponds to the scenario when all other lines are in L0 mode. Thus, no problems occur due to non-stationary noise and fast transitions from L2 state to L0 state of different lines in arbitrary order are possible. Similarly, a properly set RVN can mitigate other non-stationary noises if the upper boundary of the total noise figure obtained with desired probability is available to be measured.

The value of RVN in embodiments may be established after a link on the respective line transitions into showtime and may be updated as new lines are coming into the binder or some lines are leaving the binder. A direct way to update all lines in embodiments is bringing all them to L0 mode. One possibility is to turn all lines into L0 for a short while from time to time and each time let each CPE to measure its reference noise level Ref_Noise(f). Further, from this value a management system may compute the value of RVN. Coordination of the transition to showtime in some embodiments may be easily performed also in unbundled environments because no precise time alignment is needed: using time-of-day (ToD) time stamps or other global synchronization signals may be sufficient in some embodiments (e.g., all lines that are in L2 turn into L0 for 10 min at 2am at night to measure the reference noise level) .

Another possibility to update the RVN used in some embodiments is to select its sustained maximum value. For this, the receiver measures the RVN when a change in noise level is detected and updates the value of RVN accordingly when a higher noise level is detected. Thus, by iterations, the receiver obtains a maximum noise value (that corresponds e.g. to the case when all lines are in L0).

The updates of RVN mentioned above may be also done virtually (e.g., by a remote management system that gathers various parameters of all lines in the binder, such as loop attenuation, QLN, crosstalk coupling, etc., and pre-computes the expected RVN).

In downstream direction, it is often beneficial to leave the control of the system operation to the transmitter (at the CO). If desired, the receiver at the CPE may just measure the noise and send this raw data to the transmitter. It should be noted that for ease of reference, for example in the downstream direction the CO side is referred to as transmitter and the CPE side as receiver, corresponding to the direction of data transfer. When, as above, the receiver is described as sending something to the transmitter, actually a transmitter on the CPE side performs the sending to a receiver at the CO side, for example via a backchannel and/or eoc channel of the downstream transmission. For example, in DSL or similar systems usually transceivers are provided both on CO side and CPE side. The transmitter, in turn, can generate the RVN (which may be lower or higher than the actual noise measured by the CPE receiver, depending on the rules used by the management system at the CO). The transmitter may also generate RVN using various type of averaging or extrapolation, e.g., using RVN which is lower than actual noise (to reduce performance degradation which is the pay for increased stability) or higher than actual noise (if more systems are expected to join the binder). Similar techniques may be used to generate the RVN if generation takes place at the receiver. When the transmitter (at the CO) requires transition from one link state to another, it provides the RVN to be used for this transition. In some embodiments, the transmitter can keep more than one RVN and use them appropriately. The value of RVN generated by the management system at the CO is communicated to the CPE (for computation of bit loading and other transmission parameters); this communication can be done via embedded operations channel (eoc) or any other channel established between the CO and the CPE management systems.

In some embodiments, the value of RVN may be generated based on the following criterion:
- when bit loading of the line is selected based on the RVN, any changes of the transmit PSD in other lines (e.g., transition from L2 to L0 and back) of the binder shall not cause increase of crosstalk beyond the defined target SNR margin (TARSNRM, as defined in G.993.2 or G.998.4).

Generation of RVN in embodiments may be done either autonomously (by the CPE, with or without assistance of the CO) or under control of the CO-MIB (e.g., CO-MIB provides the rules how RVN should be created from the actually measured noise), or by the system management at the CO, autonomously. In some embodiments, the MIB can be connected to the remote management system that uses noise measurements, PSD settings, loop attenuation measurements, and other data from multiple lines in the binder, depending on implementation and specific deployment scenario. Appropriate setting of RVN may also accommodate an unexpected increase in number of active lines in some embodiments, assuming there is a preliminary estimation of the expected noise increase.

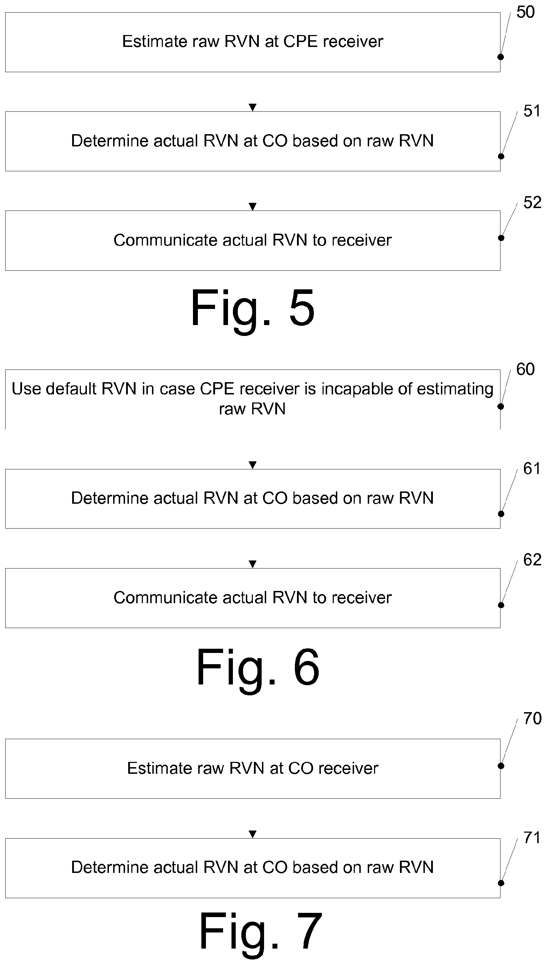

Next, with respect to Figs. 5 to 7 methods according to various embodiments will be discussed. For illustrative purposes, when explaining the methods reference will be made to the techniques and embodiments discussed above. The methods of Figs. 5 to 7 may for example be implemented in the devices of Figs. 1 and 2, but is not limited thereto.

In Fig. 5, at 50 a CPE receiver (for example one of transceivers 14 of Fig. 1) estimates a "raw" reference virtual noise (RVN). This raw RVN may be a noise which the receiver may sustain with a current bit loading and a target signal-to-noise ratio (SNR) margin. The receiver may perform the estimation at 50 autonomously, for example upon changes in a noise environment that the receiver detects by a change in an attenuation of the direct channel or a change in an SNR margin, or according to a certain schedule time grid, or upon request from a transmitter (at the CO side). In the downstream direction, in some embodiments this measured raw RVN is communicated back to the transmitter at the CO side. For communicating the raw RVN, in some embodiments an eoc message may be used.

At 51 the CO side (transmitter in a CO or street cabinet or the like) then processes the received raw RVN to generate an actual RVN. In other embodiments, the actions at 51 may be performed at the CPE receiver, e.g. using some pre-defined rules, or ruled determined by the CO or network management system, or vendor-discretionary rules. In an embodiment, the generated actual RVN may be represented as a set of break-points, for example in the format used for virtual nose in ITU-T G.993.2. However, other formats may also be used.

In some embodiments, a remote management entity (for example used by the transmitter) may be used to generate the actual virtual noise, for example a network monitoring system or a network management station (NMS). In this case, in some embodiments such a remote management entity may use raw RVN reports from multiple lines and possible also additional information to provide improved coordination between lines and achieve an optimized value of the actual RVN.

At 52, the transmitter communicates the actual RVN to the receiver, for example as part of every L2 state entry command and exit command for entering and exiting a low power mode, for example L2.1. Upon transition from one state to another or during residing in any particular state the receiver may then keep its bit loading using the obtained RVN and a target SNR margin defined.

As already mentioned above, in some embodiments different values for actual RVN may be used in different situations.

In some embodiments, the receiver may not be able to estimate or measure the raw RVN. Fig. 6 illustrates an embodiment for such a case.

In Fig. 6, at 60 some default raw RVN is used in a case where a CPE receiver is incapable of estimating the raw RVN. The default RVN may be some predetermined value, for example obtained from an MIB, or an RVN recommended by a remote management system, for example based on earlier measurements or indirect measurements.

60 and 62 of Fig. 6 then correspond to 51 and 52 of Fig. 5, using the default RVN instead of the raw RVN.

As already mentioned above, in the upstream direction essentially similar techniques as in the downstream direction may be used. Fig. 7 illustrates a method according to an embodiment usable in the upstream direction.

At 70, the raw RVN is determined at the CO receiver. The term "CO receiver" is intended to also cover cases where the receiver is in a street cabinet, an MDU cabinet, a DSLAM or the like. The estimation may be done as explained above for the case of the CPE receiver and may for example involve techniques like averaging, interpolation, extrapolation etc. At 71, the actual RVN is determined at the CO based on the raw RVN, as explained with reference to 51 of Fig. 7. Therefore, here the actual RVN may be determined internally in the CO. However, also management systems (e.g., NMS or system management at the CO, as explained above) or other management entities may be used.

The RVN is then used at the CO receiver as explained above.

Some embodiments may use a special protocol associated with transition in and out of low power modes and transmission and reception signals during these modes. The proposed methods may be implemented as extensions or modifications to the G.993.2, G.993.5, G.998.4, and new G.fast standards.

The above-described embodiments serve merely as examples and are not to be construed as limiting. The above-described techniques may for example be implemented in transmitters and/or receivers by modifying firmware, hardware, software or combinations thereof of conventional DSL transmitters and receivers including G.fast transmitters and receivers. While a plurality of specific details has been set forth above, other embodiments may comprise only some of the above-described features and/or may comprise alternative or additional features.

## Claims

1. A first digital subscriber line device (10, 14) to mitigate crosstalk noise on a signal to be transmitted over a transmission line of a network, the device (10, 14) comprising:
a transceiver (20) configured to receive a reference virtual noise signal that is an estimation of noise on the transmission line from a second digital subscriber line device (10, 14) connected to the transmission line,
wherein the transceiver (20) is configured to determine a bit loading value of the signal that mitigates the crosstalk noise based on the reference virtual noise signal,
wherein the transceiver (20) is configured to receive an update of the reference virtual noise signal at showtime,
**characterized in that**
the transceiver is configured to determine a measure of noise of the transmission line of the network and to transmit the measure of noise to the second device,
the transceiver (20) is configured to generate the bit loading value based on the reference virtual noise signal for a plurality of modes of communication, and **in that**
the transceiver (20) is configured to switch between the modes of communication, wherein at least one of the modes of communication is a power saving mode.

2. The device (10, 14) of claim 1, wherein the transceiver (20) is configured to determine the bit loading value of the signal based on the update of the reference virtual noise signal.

3. The device (10, 14) of any one of claims 1 or 2, wherein the transceiver (20) is configured to receive the update of the reference virtual noise signal that represents an actual noise at the transceiver (20).

4. The device (10, 14) of claim 3, wherein the transceiver (20) is configured to receive the update of the reference virtual noise signal that represents the actual noise caused by crosstalk from adjacent cable pairs.

5. The device (10, 14) of any one of claims 1-4, wherein the transceiver (20) is configured to receive the reference virtual noise signal that represents a reference virtual noise pattern of the actual noise at the transceiver (20).

6. The device (10, 14) of claim 5, wherein the transceiver (20) is configured to receive the reference virtual noise signal from measured noise values of the reference virtual noise pattern.

7. The device (10, 14) of any one of the preceding claims, wherein the transceiver (20) is part of a Custom Premises Equipment device.

8. The device (10, 14) of any one of the preceding claims, wherein the transceiver (20) is configured to receive the reference virtual noise signal that represents non-stationary noise arising from power transitions in other transmission lines.

9. The device (10, 14) of any one of the preceding claims, wherein the transceiver (20) is configured to receive the reference virtual noise signal represented as a set of break points.

10. The device (10, 14) of any one of the preceding claims, wherein the transceiver (20) is configured to determine the bit loading such that any changes of a power spectral density in other transmission lines do not cause an increase in the crosstalk beyond a predefined signal-to-noise-ratio margin.

11. The device (10, 14) of any one of the preceding claims, wherein the transceiver (20) is configured to transmit the signal over the network in accordance with a DSL protocol.

12. The device (10, 14) of any one of the preceding claims, wherein the device (10, 14) transmits the signal over the network in accordance with a G.fast protocol.

## Patentansprüche

1. Erstes digitales Teilnehmerleitungsgerät (10, 14) zum Abschwächen eines Übersprechungsrauschens an einem Signal, das über eine Übertragungsleitung eines Netzwerks übertragen wird, wobei das Gerät (10, 14) umfasst:
einen Transceiver (20), der konfiguriert ist zum Empfangen eines virtuellen Referenzrauschsignals, das eine Rauschschätzung an der Übertragungsleitung von einem zweiten digitalen Teilnehmerleitungsgerät (10, 14) ist, das mit der Übertragungsleitung verbunden ist,
wobei der Transceiver (20) konfiguriert ist zum Ermitteln eines Bitladewerts des Signals, welches das Übersprechungsrauschen aufgrund des virtuellen Referenzrauschsignals abschwächt,
wobei der Transceiver (20) konfiguriert ist zum Empfangen einer Aktualisierung des virtuellen Referenzrauschsignals zur Sendezeit,
**dadurch gekennzeichnet, dass**
der Transceiver konfiguriert ist zum Ermitteln einer Rauschmaßzahl der Übertragungsleitung des Netzwerks und zum Übertragen der Rauschmaßzahl an das zweite Gerät,
der Transceiver (20) konfiguriert ist zum Erzeugen des Bitladewerts aufgrund des virtuellen Referenzrauschsignals für eine Vielzahl von Kommunikationsmodi, und dadurch, dass
der Transceiver (20) konfiguriert ist zum Umschalten zwischen den Kommunikationsmodi, wobei mindestens einer der Kommunikationsmodi ein Energiesparmodus ist.

2. Gerät (10, 14) nach Anspruch 1, wobei der Transceiver (20) konfiguriert ist zum Ermitteln des Bitladewerts des Signals aufgrund der Aktualisierung des virtuellen Referenzrauschsignals.

3. Gerät (10, 14) nach einem der Ansprüche 1 oder 2, wobei der Transceiver (20) konfiguriert ist zum Empfangen der Aktualisierung des virtuellen Referenzrauschsignals, das ein aktuelles Rauschen an dem Transceiver (20) darstellt.

4. Gerät (10, 14) nach Anspruch 3, wobei der Transceiver (20) konfiguriert ist zum Empfangen der Aktualisierung des virtuellen Referenzrauschsignals, das ein aktuelles Rauschen darstellt, das durch ein Übersprechen von benachbarten Kabelpaaren verursacht wird.

5. Gerät (10, 14) nach einem der Ansprüche 1 bis 4, wobei der Transceiver (20) konfiguriert ist zum Empfangen des virtuellen Referenzrauschsignals, das ein virtuelles Referenzrauschmuster des aktuellen Rauschens an dem Transceiver (20) darstellt.

6. Gerät (10, 14) nach Anspruch 5, wobei der Transceiver (20) konfiguriert ist zum Empfangen des virtuellen Referenzrauschsignals von gemessenen Rauschwerten des virtuellen Referenzrauschmusters.

7. Gerät (10, 14) nach einem der vorhergehenden Ansprüche, wobei der Transceiver (20) Teil einer Kundenstandortgerätevorrichtung ist.

8. Gerät (10, 14) nach einem der vorhergehenden Ansprüche, wobei der Transceiver (20) konfiguriert ist zum Empfangen des virtuellen Referenzrauschsignals, das ein nicht-stationäres Rauschen darstellt, das von Stromübertragungen in anderen Übertragungsleitungen herrührt.

9. Gerät (10, 14) nach einem der vorhergehenden Ansprüche, wobei der Transceiver (20) konfiguriert ist zum Empfangen des virtuellen Referenzrauschsignals, das als eine Gruppe von Unterbrechungspunkten dargestellt wird.

10. Gerät (10, 14) nach einem der vorhergehenden Ansprüche, wobei der Transceiver (20) konfiguriert ist zum Ermitteln des Bitladens, sodass alle Änderungen einer spektralen Leistungsdichte in anderen Übertragungsleitungen keine Zunahme beim Übersprechen über einen vordefinierten Signal-Rausch-Verhältnisbereich hinaus verursachen.

11. Gerät (10, 14) nach einem der vorhergehenden Ansprüche, wobei der Transceiver (20) konfiguriert ist zum Übertragen des Signals über das Netzwerk gemäß einem DSL-Protokoll.

12. Gerät (10, 14) nach einem der vorhergehenden Ansprüche, wobei das Gerät (10, 14) das Signal über das Netzwerk gemäß einem G.fast-Protokoll überträgt.

## Revendications

1. Premier dispositif de ligne d'abonné numérique (10, 14) destiné à atténuer le bruit de diaphonie sur un signal devant être transmis par l'intermédiaire d'une ligne de transmission d'un réseau, le dispositif (10, 14) comprenant :
un émetteur-récepteur (20) configuré pour recevoir un signal de bruit virtuel de référence qui est une estimation d'un bruit sur la ligne de transmission, provenant d'un second dispositif de ligne d'abonné numérique (10, 14) connecté à la ligne de transmission, dans lequel l'émetteur-récepteur (20) est configuré pour déterminer une valeur de chargement binaire du signal qui atténue le bruit de diaphonie sur la base du signal de bruit virtuel de référence,
dans lequel l'émetteur-récepteur (20) est configuré pour recevoir une mise à jour du signal de bruit virtuel de référence au moment de l'émission,
**caractérisé en ce que**
l'émetteur-récepteur est configuré pour déterminer une mesure de bruit de la ligne de transmission du réseau et pour transmettre la mesure de bruit au second dispositif, l'émetteur-récepteur (20) est configuré pour générer la valeur de chargement binaire sur la base du signal de bruit virtuel de référence pour une pluralité de modes de communication, et **en ce que**
l'émetteur-récepteur (20) est configuré pour effectuer un basculement entre les modes de communication, dans lequel au moins l'un des modes de communication est un mode d'économie d'énergie.

2. Dispositif (10, 14) selon la revendication 1, dans lequel l'émetteur-récepteur (20) est configuré pour déterminer la valeur de chargement binaire du signal sur la base de la mise à jour du signal de bruit virtuel de référence.

3. Dispositif (10, 14) selon l'une quelconque des revendications 1 ou 2, dans lequel l'émetteur-récepteur (20) est configuré pour recevoir la mise à jour du signal de bruit virtuel de référence qui représente un bruit réel au niveau de l'émetteur-récepteur (20).

4. Dispositif (10, 14) selon la revendication 3, dans lequel l'émetteur-récepteur (20) est configuré pour recevoir la mise à jour du signal de bruit virtuel de référence qui représente le bruit réel provoqué par la diaphonie provenant de paires de câbles adjacentes.

5. Dispositif (10, 14) selon l'une quelconque des revendications 1 à 4, dans lequel l'émetteur-récepteur (20) est configuré pour recevoir le signal de bruit virtuel de référence qui représente un motif de bruit virtuel de référence du bruit réel au niveau de l'émetteur-récepteur (20).

6. Dispositif (10, 14) selon la revendication 5, dans lequel l'émetteur-récepteur (20) est configuré pour recevoir le signal de bruit virtuel de référence provenant de valeurs de bruit mesurées du motif de bruit virtuel de référence.

7. Dispositif (10, 14) selon l'une quelconque des revendications précédentes, dans lequel l'émetteur-récepteur (20) fait partie d'un dispositif d'Équipement de Locaux d'Abonnés.

8. Dispositif (10, 14) selon l'une quelconque des revendications précédentes, dans lequel l'émetteur-récepteur (20) est configuré pour recevoir le signal de bruit virtuel de référence qui représente un bruit non stationnaire résultant de transitions de puissance sur d'autres lignes de transmission.

9. Dispositif (10, 14) selon l'une quelconque des revendications précédentes, dans lequel l'émetteur-récepteur (20) est configuré pour recevoir le signal de bruit virtuel de référence représenté comme étant un ensemble de points de discontinuité.

10. Dispositif (10, 14) selon l'une quelconque des revendications précédentes, dans lequel l'émetteur-récepteur (20) est configuré pour déterminer le chargement binaire de telle manière qu'une éventuelle variation de la densité spectrale de puissance sur d'autres lignes de transmission ne provoque pas d'augmentation de la diaphonie au-delà d'une marge prédéfinie du rapport signal à bruit.

11. Dispositif (10, 14) selon l'une quelconque des revendications précédentes, dans lequel l'émetteur-récepteur (20) est configuré pour transmettre le signal sur le réseau conformément à un protocole DSL.

12. Dispositif (10, 14) selon l'une quelconque des revendications précédentes, dans lequel le dispositif (10, 14) transmet le signal sur le réseau conformément à un protocole G.fast.
